# EUROPEAN PATENT SPECIFICATION

(11) **EP 1 965 610 B1**
(45) Date of publication and mention of the grant of the patent: **19.05.2010**
(21) Application number: 08010475.5
(22) Date of filing: 11.04.2007
(51) Int. Cl.: H05B 41/282, H01F 27/30

(54) **Transformer apparatus, inverter transformer, and drive circuit**
Transformatorvorrichtung, Wechselrichter-Transformator und Steuerkreis
Appareil transformateur, transformateur inverseur et circuit de commande

(30) Priority: 19.04.2006 JP 2006116159; 29.01.2007 JP 2007018469
(43) Date of publication of application: 03.09.2008
(62) Divisional of application: 07007433.1
(73) Proprietor: Sumida Corporation, Chuo-ku Tokyo (JP)
(72) Inventor: Fushimi, Tadayuki, Chuo-ku Tokyo (JP); Miyazaki, Hiroyuki, Chuo-ku Tokyo (JP); Miura, Hiroki, Chuo-ku Tokyo (JP)
(74) Representative: Müller-Boré & Partner Patentanwälte

(56) References cited:
- US-A- 4 902 942
- US-A1- 2004 189 432
- US-B1- 6 310 444

## Description

### BACKGROUND OF THE INVENTION

### Field of the Invention

The present invention relates to drive circuits comprising transformer apparatuses configured with integrated inverter transformers and balance transformers.

### Description of the Related Art

It is a widely utilized technology to control currents flowing through a plurality of cold cathode discharge tubes to predetermined values in a cold cathode discharge tube drive circuit by connecting a balance transformer to a low voltage side of the drive circuit or by connecting a balance transformer to a high voltage side to which a cold cathode discharge tube is connected. It is known that in a cold cathode discharge tube, a voltage applied to electrodes of the cold cathode discharge tube fluctuates depending on an impedance fluctuation or the like, so that currents flowing through each cold cathode discharge tube is changed depending on the impedance of each cold cathode discharge tube.

As well-known, on backside of a liquid display panel, a plurality of cold cathode discharge tubes are installed as back-lights. As a recent trend, a size of a liquid display panel becomes larger. For example, an average size for a home-use liquid crystal TV has been changed to use a liquid crystal display panel of 32 to 45 inches from 20 inches.

As the size of the liquid crystal display panel becomes larger, the number of cold cathode discharge tubes used in one liquid crystal TV also increases. Therefore, if the currents flowing through each of the cold cathode discharge tubes are different to each other as described above, unevenness of emission occurs between cold cathode discharge tubes. This invites unevenness of luminance in a liquid crystal display panel, so that it is necessary to comfort currents flowing through installed all cold cathode discharge tubes for providing a high-quality liquid crystal TV. Therefore, it is common to use an inverter transformer and a balance transformer in a cold cathode discharge tube drive circuit.

In this case, conventionally, it has been proposed to connect a balance transformer coil to a low-voltage side or a high-voltage side in a cold cathode discharge tube drive circuit.

Further, an inverter transformer having a plurality of coils has been proposed so as to drive a plurality of cold cathode discharge tubes with a single magnetic path of the inverter transformer.

Sill further, such drive circuit has been proposed that an inductance element connected in series with a first primary coil and an inductance element connected in series with a second primary coil are provided in the same magnetic path.

Also, an inverter transformer configured with an IHI-shaped core portion has been proposed by the assignee of this application. Followings are patent documents related to the drive circuits and/or transformer apparatuses.
Japanese Patent Laid-open No. 2003-31383
Japanese Patent Laid-open No. 2004-506294
Japanese Patent Laid-open No. 2005-311227
Japanese Patent Laid-open No. 2004-349293
Japanese Patent Laid-open No. 64-030463
Japanese Patent Laid-open No. 2000-133531

However, it is well-known that an inverter transformer and a balance transformer are separately produced as independent transformer. Accordingly, in case of assembling a cold cathode discharge tube drive circuit, an inverter transformer, a balance transformer, a switching circuit and a control circuit are generally mounted on a circuit board, independently. However, a separate mounting of an inverter transformer and a balance transformer on the circuit board requires an extra space, and further costs for parts and production also increase. In addition, it is hard to downsize the cold cathode discharge tube drive circuit, and it has become difficult to satisfy the request of downsizing and low-weighting from the liquid crystal display panel side.

Document US 6,310,444 B1 discloses a multiple lamp LCD backlight driver with coupled magnetic components, wherein an inverter for driving multiple lamps has a first circuit for driving a first lamp. The first circuit is made up of a first inductor in series with a first output transformer to drive the first lamp. A second circuit drives a second lamp. The second circuit is made up of a second inductor in series with a second output transformer which drives a second lamp. The first and second transformers are coupled together by a first single magnetic core such that magnetic flux from said first and second transformers is cancelled in the magnetic core to reduce core losses while improving current matching. In a second embodiment the inverter further includes a second magnetic core coupling the first and second inductors with minimized leakage inductance. The number of magnetic components for a two lamp backlight is then reduced to two.

Document US 4,902,942 discloses a controlled leakage transformer for fluorescent lamp ballast including integral ballasting inductor. All the magnetic functions required in a ballast for a fluorescent lamp are integrated in a single, standard magnetic core which provides isolation, voltage step-up, ballasting, power factor correction and cathode heat for multiple lamps operating multiple lamps in an isolated-series configuration. In a three-legged transformer core embodiment, the primary winding is continuously wound on all three legs, while secondary windings are included on two of the legs. Ballasting inductance is provided by winding the primary on the third leg.

Document US 2004/0189432 A1 discloses an integrated magnetic assembly that allows the primary and secondary windings of a transformer and a separate inductor winding to be integrated on a unitary magnetic structure. The unitary magnetic structure includes first, second, and third legs that are physically connected and magnetically coupled. The primary and secondary windings of the transformer can be formed on the third leg of the unitary magnetic structure. Alternatively, the primary and secondary windings can be split between the first and second legs. Thus, the primary winding includes first and second primary windings disposed on the first and second legs and the secondary winding includes first and second secondary windings disposed on the first and second legs. The inductor winding may also be formed either on the third leg or it may split into first and second inductor windings and disposed on the first and second legs.

Thus, according to an aspect, it is a problem to provide a drive circuit which allows downsizing and low-weighting.

This problem is solved by the drive circuit having the features disclosed in claim 1. Preferred embodiments are defined in the dependent subclaims.

In order to attain the above object, the drive circuit according to an embodiment of the present invention comprises a transformer apparatus which comprises:
an inverter transformer having a primary coil and a secondary coil; and
a balance transformer having a primary coil and a secondary coil, wherein
the inverter transformer and balance transformer are integrally formed by sharing a part of their core portion.

The inverter transformer may be an inverter transformer for driving discharge tubes which comprises:
a primary coil and a secondary coil, wherein coils configuring a balance transformer having a primary coil and a secondary coil are installed.

The inverter transformer may further be an inverter transformer for driving discharge tubes which comprises:
a primary coil;
a secondary coil; and
a coil for configuring a balance transformer, wherein
the primary coil and the secondary coil are wound so that magnetic fluxes generated by both the primary coil and the secondary coil are configured to couple to each other, and
a flux path for a magnetic flux generated by the coil for configuring the balance transformer is different from a flux path for the magnetic fluxes generated by the both the primary coil and the secondary coil.

In order to attain the above object, the drive circuit according to still further embodiment of the present invention is a drive circuit for driving at least two transformer apparatus each comprising an inverter transformer having a primary coil and a secondary coil, and a balance transformer having a primary coil and a secondary coil, wherein the inverter transformer and the balance transformer are integrally formed by sharing a part of core portion of the transformer apparatus, the drive circuit comprises:
a switching circuit, and
a control circuit for controlling the switching circuit, wherein
in each of the transformer apparatus, the primary coil of the inverter transformer and the secondary coil of the balance transformer are connected in series, and
an output of the switching circuit is supplied to both ends of the series connection.

It is possible to provide a transformer apparatus, an inverter transformer, and a drive circuit using the same, wherein an inverter transformer and a balance transformer of the transformer apparatus are integrally formed and thereby the drive circuit can be downsized. Further features of the present invention will become apparent from the following description of exemplary embodiments with reference to the attached drawings.

Further features of the present invention will become apparent from the following description of exemplary embodiments (with reference to the attached drawings).

### BRIEF DESCRIPTION OF THE DRAWINGS

Fig. 1 is a circuit diagram of a cold cathode discharge tube drive circuit according to first embodiment of the present invention to which a transformer apparatus or an inverter transformer according to embodiments of the present invention;

Fig. 2 is a circuit diagram of a cold cathode discharge tube drive circuit according to first embodiment of the present invention to which a transformer apparatus or an inverter transformer according to embodiments of the present invention;

Fig. 3 is a diagram showing a configuration of a transformer apparatus or an inverter transformer according to a second embodiment of the present invention;

Fig. 4 is a diagram showing a configuration of a transformer apparatus or an inverter transformer according to a second embodiment of the present invention;

Fig. 5 is an external perspective view of inverter transformer according to a fourth embodiment of the present invention;

Figs. 6A to 6F are diagrams showing the other configurations of transformer apparatuses or inverter transformers according to the other embodiments of the present invention;

Fig. 7 is an external perspective view of a transformer apparatus or an inverter transformer according to further another embodiment of the present invention; and

Fig. 8 is a table for describing an operation of the showing the further another embodiment of the present invention.

### DESCRIPTION OF THE EMBODIMENTS

### First Embodiment

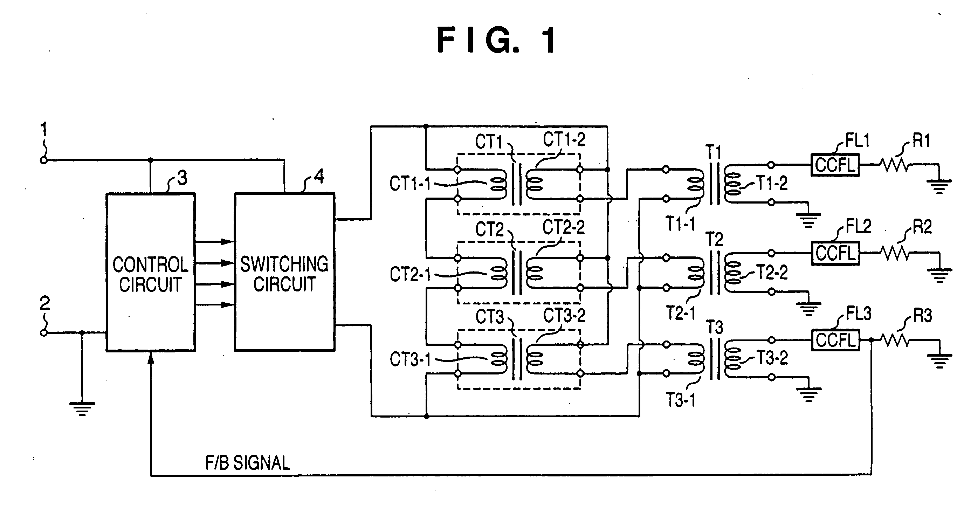

Fig. 1 shows a drive circuit for evenly driving a plurality of cold cathode discharge tubes while using inverter transformers and balance transformers, and is an example of a cold cathode discharge tube drive circuit to which a transformer apparatus or an inverter transformer of the present invention is employed. Now, a cold cathode discharge tube drive circuit in Fig.1 is described as a first embodiment of the present invention.

A DC voltage is supplied between power supply terminals 1 and 2 in Fig. 1, the DC voltage at the power supply terminal 1 is supplied to a control circuit 3 and a switching circuit 4, and the power supply terminal 2 is connected to ground. The control circuit 3 includes an oscillation circuit and a PWM (pulse width modulation) circuit inside, and pulse-width modulate a switching signal generated in accordance with an F/B signal which is described later. The switching circuit 4 comprises switching circuits configured with transistors, and outputs a pulse drive signal (drive voltage) generated by switching the DC voltage applied between the power supply terminals 1 and 2 using the switching signals from the control circuit 3.

The cold cathode discharge tube drive circuit as shown in Fig. 1 is configured by using three inverter transformers T1 to T3 and three balance transformers CT1 to CT3. As shown in the figure, three primary coils CT1-1 to CT3-1 provided in the three balance transformers CT1 to CT3 are connected in series, and the pulse drive signals from the switching circuit 4 are applied to both ends of the series connection.

Further, a secondary coil CT1-2 provided in the balance transformer CT1 and the primary coil T1-1 provided in the inverter transformer T1 are connected in series, and the pulse drive signals from the switching circuit 4 are applied to both ends of the series connection. In addition, the secondary coil CT2-2 provided in the balance transformer CT2 and the primary coil T2-1 provided in the inverter transformer T2 are connected in series, and the pulse drive signals from the switching circuit 4 are applied to both ends of the series connection. In the same manner, the secondary coil CT3-2 provided in the balance transformer CT3 and the primary coil T3-1 provided in the inverter transformer T3 are connected in series, and the pulse drive signals from the switching circuit 4 are applied to both ends of the series connection.

Further, one of terminals of the secondary coil T1-2 of the inverter transformer T1 is connected to ground by way of a cold cathode discharge tube FL1 and a resister R1, and the other terminal is directly connected to ground. In addition, one of terminals of the secondary coil T2-2 of the inverter transformer T2 is connected to ground by way of a cold cathode discharge tube FL2 and a resister R2, and the other terminal is directly connected to ground. In the same manner, one of terminals of the secondary coil T3-2 of the inverter transformer T3 is connected to ground by way of a cold cathode discharge tube FL3 and a resister R3, and the other terminal is directly connected to ground. Further, a connecting mid-point of the cold cathode discharge tube FL3 and the resister R3 is pulled out, and is fed back to the control circuit 3 as a F/B signal relating to the current flowing through the cold cathode discharge tube FL3.

Either an oscillation frequency of an oscillation circuit or a pulse width modulation with a PWM circuit included in the control circuit 3 modulates the switching signal by feeding back the F/B signal to the control circuit 3. Thereby, the current flowing through the cold cathode discharge tube FL3 is controlled to be constant, and the emitting brightness of the cold cathode discharge tube FL3 is set to be uniform. In addition, the currents flowing through the three inverter transformers T1 to T3 are controlled to be the same by providing the three balance transformers CT1 to CT3, it is possible to emit all the cold cathode discharge tubes FL1 to FL3 to be uniform.

Each of the inverter transformers T1 to T3 used in the cold cathode discharge tube drive circuit shown in Fig. 1 comprises a single primary coil and a single secondary coil. However, the configuration of the inverter transformer, a connecting relation between the inverter transformer and the cold cathode discharge tubes, a connecting relation to the balance transformer, and the like are not limited to the configuration illustrated in Fig. 1, and various modifications are possible.

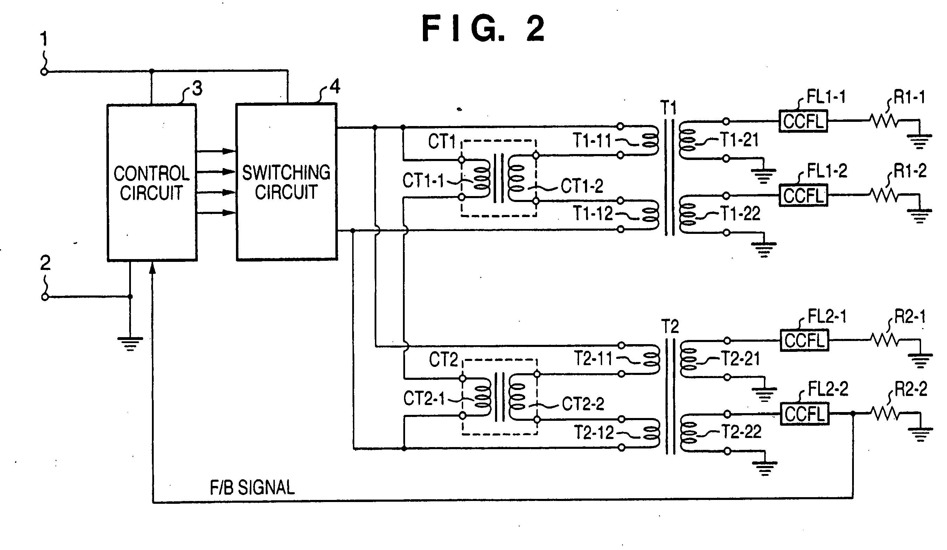

For example, as illustrated in Fig. 2, other example of the cold cathode discharge tube drive circuit according to one embodiment of the present invention to which a transformer apparatus or an inverter transformer according to the embodiment of the present invention is adapted. In Fig. 2, the same reference codes are applied to the portions common to Fig. 1, and the description thereof is omitted.

In the figure, two inverter transformers T1 and T2 each comprising two primary coils and two secondary coils are used as inverter transformers. That is, the inverter transformer T1 comprises two primary coils T1-11 and T2-12, and two secondary coils T1-21 and T1-22. Similarly, the inverter transformer T2 comprises two primary coils T2-11 and T2-12 and two secondary coils T2-21 and T2-22.

The two primary coils T1-11 and T2-12 of the inverter transformer T1 are connected in series to each other while sandwiching the secondary coil CT1-2 of a balance transformer CT1, and the pulse drive signals from the switching circuit 4 are applied to both ends of the serial connection. Similarly, the two coils T2-11 and T2-12 of the inverter transformer T2 are connected in series to each other while sandwiching the secondary coil CT2-2 of the balance transformer CT2, and the pulse drive signals from the switching circuit 4 are applied to both ends of the serial connection.

In addition, the primary coil CT1-1 of a balance transformer CT1 is connected in series to the primary coil CT2-1 of the balance transformer CT2, and the pulse drive signals from the switching circuit 4 are applied to both ends of the serial connection.

Further in respective secondary coils T1-21 and T1-22 of the inverter transformer T1, each one of terminals is connected to ground by way of the cold cathode discharge tubes FL1-1 and FL1-2 and resisters R1-1 and R1-2, and each of the other terminals is directly connected to ground. Similarly, in each of the secondary coils T2-21 and T2-22 of the inverter transformer T2, each one of terminals is connected to ground by way of the cold cathode discharge tubes FL2-1 and FL2-2 and resistors R2-1 and R2-2, and each of the other terminals is directly connected to ground.

Further, a connecting mid-point between the cold cathode discharge tube FL2-2 and the resistor R2-2 is derived, and is fed back to the control circuit 3 as a F/B signal for controlling the current flowing through the cold cathode discharge tube FL2-2. Also in the cold cathode discharge tube drive circuit in Fig. 2, it is possible to emit all the cold cathode discharge tubes to be uniform by the work of the F/B signal and the balance transformers CT1 and CT2.

### Second Embodiment

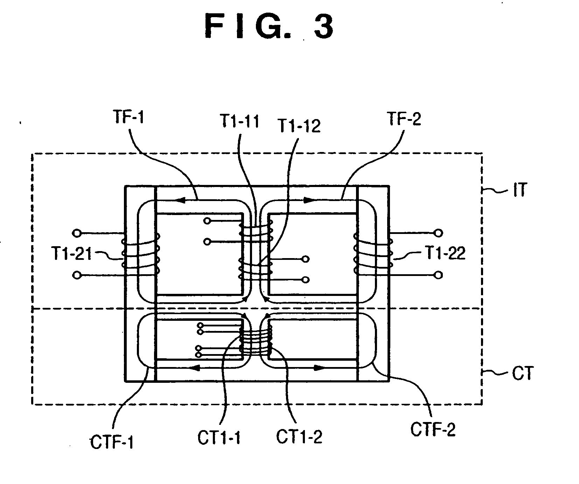

Fig. 3 illustrates a transformer apparatus according to a second embodiment of the present invention, wherein the transformer apparatus uses the same type of the inverter transformer used in the cold cathode discharge tube drive circuit in Fig. 2 according to the first embodiment of the cold cathode discharge tube drive circuit. The transformer apparatus illustrated in Fig.3 has a structure configured by integrally combining the inverter transformer and the balance transformer.

Namely, the transformer apparatus comprises a 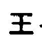 -shaped core portion located at a center and having a shape of Chinese character 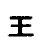 and two I-shaped core portions provided at both left said and a right side. An axis line of a center core portion of the 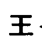 -shaped core portion and an axis line of the two I-shaped core portion are configured to be parallel to each other. As above, the transformer apparatus is configured wherein the core portion is partially shared by the inverter transformer section IT and the balance transformer section CT. In the inverter transformer section IT, two primary coils T1-11 and T2-12 are wound provided at the core portion of the center core portion. Further, each of the secondary coils T1-21 and T1-22 is wound on the I-shaped core portions provided at left and right sides and arranged in parallel to each other.

In the balance transformer section CT, the primary coils CT1-1 and CT1-2 are wound on a core portion of a center core portion. In this case, an axis line of the primary coils CT1-1 and CT1-2 of the balance transformer section CT is provided over an axis line of the primary coil T1-11 and the secondary coil T1-12 of the inverter transformer section IT.

Fluxes generated at the core portions of the inverter transformer section IT are defined as TF-1 and TF-2, and fluxes generated at the core portions of the balance transformer section CT are defined as CTF-1 and CTF-2. In this case, as shown in the figure, in the magnetic path formed with the 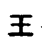 -shaped core portion and the I-shaped core portion, a direction of each coil current and a winding direction of a coil are determined so that the directions of the flux are the same in the core portion extending in parallel at both left and right sides at the center core portion of the 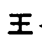 -shaped core portion where the flux flows commonly.

As described above, it is possible to provide a transformer apparatus that performs a downsizing, a reduction of the number of parts, and a cost saving by partially sharing the core portion and integrally assembling the inverter transformer and the balance transformer. In addition, the primary coils T1-11 and T2-12 are may be connected to a common terminal to which the balance transformer is connected by providing an intermediate tap, and this enables to reduce the number of terminals to be used.

In this case, the configuration of the transformer apparatus in Fig. 3 can be modified into various forms. For example, the transformer apparatus may be configured to be a structure wherein the two primary coils T1-11 and T2-12 provided at the core portion of the center core portion in the 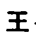 -shaped core portion may be wound on both ends of the I-shaped core portion together with the secondary coils T1-21 and T1-22 while sharing the core portion. In this case, any coil may not be wound on the core portion at the center core portion of the 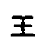 -shaped core portion in the inverter transformer section IT. In addition, also in the balance transformer section CT, it is possible to be a structure wherein the primary coil CT1-1 is wound on one of ends of the I-shaped core portions arranged in parallel to each other, and the secondary coil CT1-2 is wound on the other thereof.

### Third Embodiment

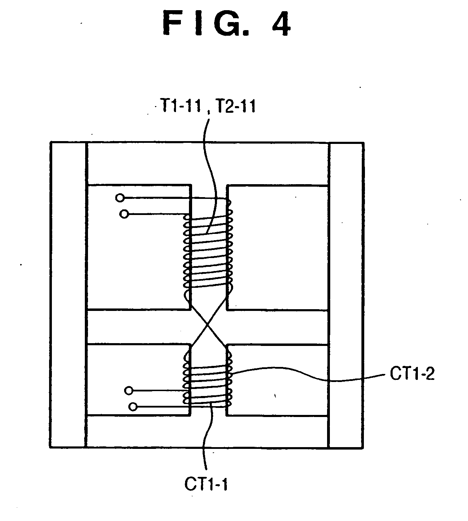

Fig. 4 illustrates a transformer apparatus according to the third embodiment of the present invention.

In the cold cathode discharge tube drive circuit in Fig. 2 described as the first embodiment of the present invention, two primary coils T1-11 and T2-12 provided in the inverter transformer T1 are connected in series to each other while sandwiching the secondary coil CT1-2 provided in the balance transformer CT1. Then, the pulse drive signals from the switching circuit 4 are applied to the both ends of the serial connection.

That is, in the transformer apparatus according to the third embodiment in Fig. 4, the other end of the primary coil T1-11 is directly extended and wound as the secondary coil CT1-2 of the balance transformer section CT located at lower side of the 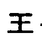 -shaped core portion. Further, the transformer apparatus has a structure wherein the primary coil is continuously extended and wound directly on the inverter transformer section IT. Further, a primary coil CT1-1 is separately provided at the balance transformer section CT. In this case, two primary coils T1-11 and T2-12 of the inverter transformer section IT and two primary coils CT1-1 and CT1-2 of the balance transformer section CT 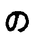 primary coils CT1-1 and CT1-2 share the center core portion of the 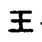 -shaped core portion, and is provided over the same axis line.

With the above described coil configuration, it is possible to reduce the number of lead lines and the number of lead terminals of the transformer apparatus which is configured to include the inverter transformer section IT and the balance transformer section CT. The reduction of the number of terminals enables further downsizing. In this case, the secondary coil is neglected in the inverter transformer section It of the transformer apparatus in Fig. 4.

### Fourth Embodiment

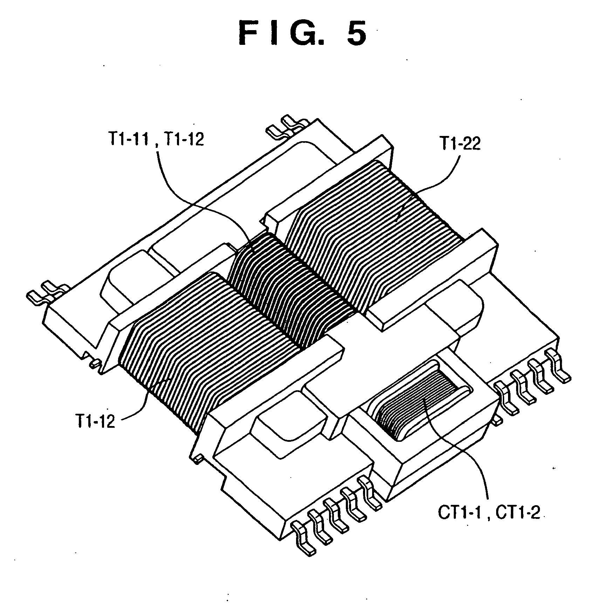

Fig. 5 illustrates an external perspective view of a fourth embodiment of the present invention. A transformer apparatus according to the fourth embodiment in Fig. 5, a H-shaped core portion and two I-shaped core portions are used in an inverter transformer section IT, and an E-shaped core portion is used in a balance transformer section CT. The center core portion of the H-shaped core portion and the axis line of the two I-shaped core portions are set to be parallel to each other. The primary coils T1-11 and T2-12 of the inverter transformer section IT are wound on a core portion of a center core portion of the H-shaped core portion. In addition, the primary coils CT1-1 and CT1-2 of the balance transformer section CT are configured to be wound on the core portion of the center core portion of the E-shaped core portion. In Fig. 5, a terminal group for each coil is provided on each support table for supporting each core portion.

As described above, it is possible to provide a small transformer apparatus by configuring to share a part of the core portion.

### Other Embodiment

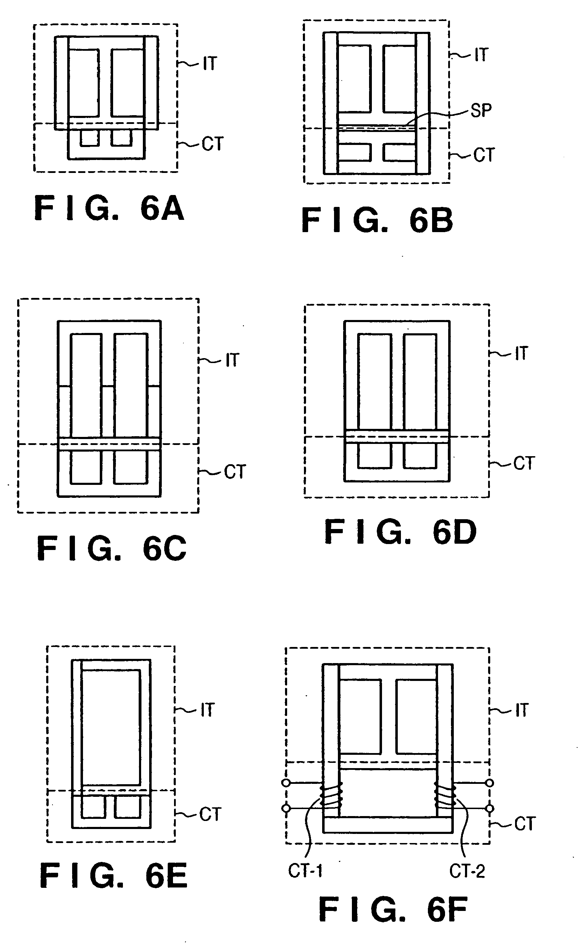

In the transformer apparatus according to the present invention, various modifications are possible in a combined structure of core portions configuring an inverter transformer section IT and a balance transformer section CT. Figs. 6A to 6F show these modified embodiments, and each embodiment is possible to e an embodiment of the present invention. The transformer apparatus in Figs. 6A to 6F are illustrated without coils.

The embodiment in Fig. 6A corresponds to the fourth embodiment shown in Fig. 5, and has the same configuration with regard to the core portions as those in Fig. 5.

Fig. 6B illustrates a transformer apparatus having a structure comprising H-shaped core portions provided in each of the inverter transformer section IT and the balance transformer section CT, and two I-shaped core portions shared and used by the inverter transformer section It and the balance transformer section CT. In the figure, an insulator SP or an air gap may be provided at an abutting portion at each H-shaped core portion between the inverter transformer section IT and the balance transformer section CT.

Fig. 6C illustrates a transformer apparatus wherein an inverter transformer section IT uses two E-shaped core portions and a balance transformer section CT uses one E-shaped core portion. In this case, the number of the core portions is three, and each center core portion of the E-shaped core portions are provided on the same axis line.

Fig. 6D illustrates a transformer apparatus wherein each of an inverter transformer section IT and a balance transformer section CT uses an E-shaped core portion and uses to share one I-shaped core portion. The number of the core portions is also three.

In Fig. 6E, a transformer apparatus is illustrated wherein the inverter transformer section IT uses an I-shaped core portion and an U-shaped core portion, and a balance transformer section CT uses one E-shaped core portion. The number of the core portions is also three.

Further, Fig. 6F illustrates another modified embodiment wherein the transformer apparatus comprises an inverter transformer section IT using an H-shaped core portion, a balance transformer section CT uses a single I-shaped core portion, and commonly used two I-shaped core portions. In this embodiment, the coils CT-1 and CT-2 of the balance transformer section CT are wound on each of the I-shaped core portions.

As described above, it becomes possible to attain a downsizing, a reduction of the number of parts, and a reduction of production steps by integrally forming the inverter transformer section IT and the balance transformer section CT and by sharing and using a part of core portion of each transformer as a magnetic path.

Further, in the transformer structure in which a primary coil is wound on the H-shaped core portion as shown in Fig. 5, and secondary coils are wound on each I-shaped core portion provided on both ends of the H-shaped core portion, the magnetic coupling rate tends to be deteriorated. For example, with the structure configured as above described, an air gap may exist at a joint surface between the I-shaped core portion and the H-shaped core portion. Accordingly, a part of the flux generated from the primary coil may leak to outside before reaching the secondary coil, so that the magnetic coupling may be deteriorated. Resultantly, not only the transformer shown in Fig. 5, a magnetic coupling rate has been deteriorated in a transformer having a configuration including an air gap at a joint surface between cores.

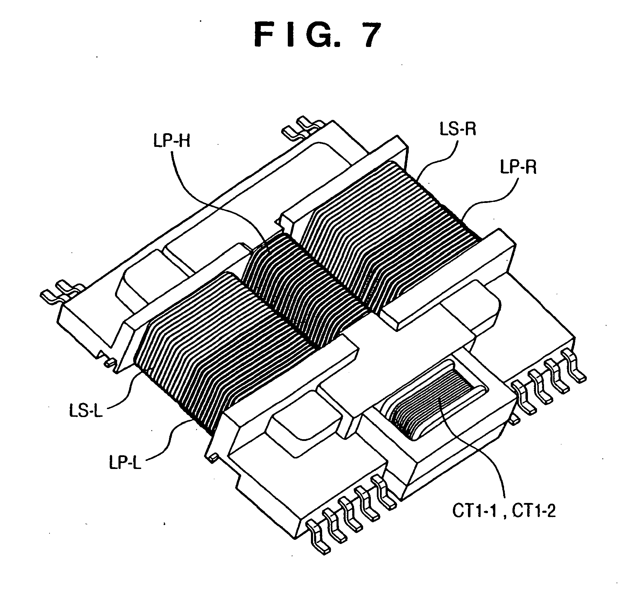

As shown in Fig. 7, it is possible, as a better embodiment for avoiding the above-mentioned defects, to increase a coupling coefficient k as a representative of a magnetic coupling rate by winding a part of the primary coil to be wound on the H-shaped core portion on a coil bobbin of the secondary coil. In Fig. 7, it is possible to vary a relation between the magnetic coupling rate and the leakage inductance value by increasing or decreasing the number of turns of the primary coil to be wound on the secondary coil.

Namely in Fig. 7, a coil LP-H is a primary coil wound on the center core portion of the H-shaped core portion, a coil LP-R is a primary coil wound on a secondary coil LS-L located in a left side, and a coil LP-R is a primary coil wound on a secondary coil LS-R located in a right side. These primary coils LP-L, LP-H and LP-R are connected in series.

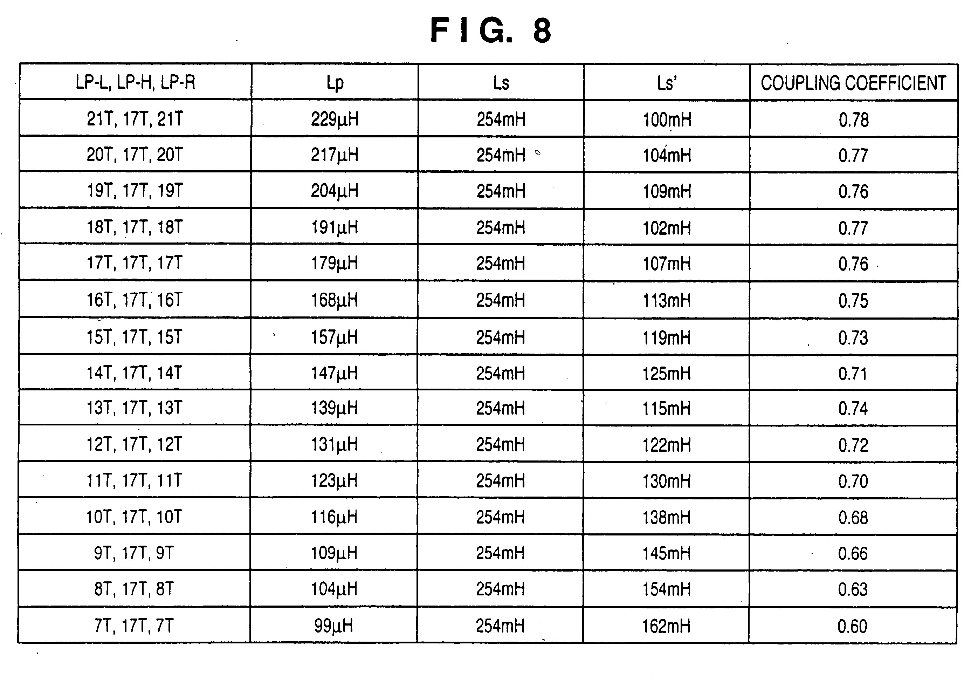

Fig. 8 is a test data table that shows that a coupling coefficient k can be changed depending on the number T of turns of the primary coils LP-L and LP-R wound on the secondary coils LS-L and LS-R in the configuration in Fig. 7. In the test data table in Fig. 8, an Lp denotes an inductance value generated by the primary coils LP-L, LP-H and LP-R, a Ls denotes an inductance value generated by one of the secondary coil LS-L or LS-R, and an Ls' denotes a leakage inductance value. In this case, a relation between the inductance values and the coupling coefficient k is expressed as k² = 1 - (Ls'/Ls).

As will be seen from the table in Fig. 8, the coupling coefficient k increases as the number of turns of the primary coils LP-L and LP-R wound on the secondary coils LS-L and LS-R increases.

In each transformer apparatus according to each embodiment of the present invention, coils may be wound on any core portion in the inverter transformer section IT and the balance transformer section CT unless departing from its role in each embodiment. Further, separate plates are provided on the bobbin for winding the secondary coil according to each embodiment of the present invention, and each embodiment is so designed that a voltage difference between a winding start position and a winding end position of the coil wound on a coil groove within the separate plates becomes about 300V.

Even if a winding start lead and a winding end lead are contacted by breaking up of coils during windings of coils, it is so configured as to fully maintain a withstand voltage by an insulator film of the coil wire. Further, materials for the bobbin to be used are formed with thermoplastics, so that any burr does not appear, and it is possible to avoid breaking up of coils even a wire having a small diameter is employed.

Further, it is possible to directly wind the primary coil, if an NI-Zn system core portion is used as the H-shaped core portion provided between two I-shaped core portions. An Ni-Zn system core portion shows extremely higher insulation resistance than Mn-Zn system core portion, so that it is not necessary to maintain insulation using coil bobbins. Further in the inverter transformer, a large current flows through the primary coil than the secondary coil, so that a wire having a fairly larger diameter is used for the primary coil than the secondary coil. Accordingly, even if the primary coil directly wound on the core portion, breaking of coil seldom occurs.

Further, it is possible to make it easy to wind coils by providing a step at an end of a coil axis of the H-shaped core portion. It is assumed that the inverter transformer section IT is configured with an H-shaped core portion and two I-shaped core portions and the balance transformer section CT is formed at an end portion of the H-shaped core portion wit an E-shaped core portion and a coil bobbin. In this case, in the balance transformer section CT and the inverter transformer section IT, the flux flows through a common flux path at portion where the H-shaped core portion and the E-shaped core portion contact to each other. However, the flux tends to flow a shorter flux path, so that the flux generated by the inverter transformer section IT seldom comes into the flux path generated by the balance transformer section CT, and they do not interfere.

The above is described as a transformer apparatus having an integrated inverter transformer section It and a balance transformer section CT. However, the present invention can be defined as an inverter transformer having an integrated balance transformer section CT.

According to the present invention, it is possible to provide a downsized transformer apparatus by integrating an inverter transformer and a balance transformer. Thereby, it is possible to save space on a whole circuit board, and the balance transformer is built in the transformer apparatus, so that it also possible to yield cost merits. Further, a balance transformer is provided at a low voltage side, namely at a primary coil side of the drive transformer, so that it is not necessary to provide parts for adjusting currents at a high voltage side. This solves insulation problems.

According to another aspect, a transformer apparatus may comprise: an inverter transformer having a primary coil and a secondary coil; and a balance transformer having a primary coil and a secondary coil, wherein said inverter transformer and balance transformer are integrally formed by sharing a part of a core portion of the transformer apparatus.
In the transformer apparatus said secondary coil of the inverter transformer may be provided so that an axis line of the secondary coil becomes parallel to an axis line of the primary coil in the inverter transformer; and said balance transformer is provided on the axis line of the primary coil of the inverter transformer.
Further, in the transformer apparatus a portion of the primary coil may be wound on the axis line of the secondary coil.
Alternatively, in the transformer apparatus said primary coil of the inverter transformer may be wound on a center core portion of an H-shaped core portion of the inverter transformer; said secondary coil of the inverter transformer may be wound on a core portion of an I-shaped core portion of the inverter transformer; and said primary coil and said secondary coil may be wound on a center core portion of an E-shaped core portion of the balance transformer.
According to another aspect, an inverter transformer for driving discharge tubes may comprise: a primary coil and a secondary coil, wherein coils configuring a balance transformer having a primary coil and a secondary coil are installed.
In the inverter transformer an axis line of the primary coil of the inverter transformer and an axis line of the secondary coil of the inverter transformer may be configured to be parallel to each other, and the primary coil and the secondary coil of the balance transformer may be mounted on the axis line of the primary coil of the inverter transformer.
Alternatively, in the inverter transformer a part of the primary coil may be wound on the axis line of the secondary coil.
According to another aspect, an inverter transformer for driving discharge tubes may comprise: a primary coil; a secondary coil; and a coil for configuring a balance transformer, wherein said primary coil and the secondary coil are wound so that magnetic fluxes generated by both the primary coil and the secondary coil are configured to couple to each other, and a flux path for a magnetic flux generated by the coil for configuring the balance transformer is different from a flux path for the magnetic fluxes generated by the both the primary coil and the secondary coil.
In the inverter transformer an axis line of the primary coil and an axis line of the secondary coil may be configured to be parallel to each other, and the coil of the balance transformer may be provided on the axis line of the primary coil of the inverter transformer.
Further, in the transformer apparatus a portion of said primary coil may be wound on the axis line of the secondary coil.
According to another aspect, there may be provided a drive circuit for driving at least two transformer apparatus each comprising an inverter transformer having a primary coil and a secondary coil, and a balance transformer having a primary coil and a secondary coil, wherein the inverter transformer and the balance transformer are integrally formed by sharing a part of core portion of the transformer apparatus, said drive circuit comprises: a switching circuit, and a control circuit for controlling the switching circuit, wherein in each of the transformer apparatus, the primary coil of the inverter transformer and the secondary coil of the balance transformer are connected in series, and an output of the switching circuit is supplied to both ends of the series connection.
In the drive circuit each primary coil of the balance transformer of at least two transformer apparatus may be connected in series, and the output of the switching circuit may be supplied to both ends of the series connection of the primary coils.

## Claims

1. A drive circuit comprising:
a plurality of transformer apparatuses;
a switching circuit (4) connected to a power source (1); and
a plurality of discharge tubes (FL1, FL2, FL3);
wherein each transformer apparatus comprises:
an inverter transformer (T1, T2, T3) having a primary coil (T1-1, T2-1, T3-1) and a secondary coil (T1-2, T2-2, T3-2); and
a balance transformer (CT1, CT2, CT3) having a primary coil (CT1-1, CT2-1, CT3-1) and a secondary coil (CT1-2, CT2-2, CT3-2);
wherein the primary coil (T1-1, T2-1, T3-1) of said inverter transformer is connected to said switching circuit;
the secondary coil (T1-2, T2-2, T3-2) of each of said inverter transformers is connected to a respective one of said discharge tubes (FL1, FL2, FL3); and wherein the balance transformers (CT1, CT2, CT3) are provided to equalize the current flowing through the inventer transformers (T1, T2, T3)
**characterized in that** the inverter transformer and the balance transformer are integrally formed by sharing a part of their core portion.

2. The drive circuit according to claim 1, wherein
in each transformer apparatus, the primary coil of the inverter transformer and the secondary coil of the balance transformer are connected in series, and
an output of the switching circuit is supplied to both ends of the series connection.

3. The drive circuit according to claim 2, wherein
the primary coils of said inverter transformers in said plurality of transformer apparatuses have one connection in common connected to said switching circuit, and
the secondary coils of said balance transformers in said plurality of transformer apparatuses have one connection in common connected to said switching circuit.

4. The drive circuit according to claim 1, wherein
primary coils of the balance transformers in said plurality of transformer apparatuses are connected in series, and
the switching circuit is connected to both ends of the series connection of the primary coils of the balance transformers.

## Patentansprüche

1. Treiberschaltung, umfassend:
eine Mehrzahl von Transformatorvorrichtungen;
einen Schaltkreis (4), der mit einer Leistungsquelle (1) verbunden ist; und
eine Mehrzahl von Entladungsröhren (FL1, FL2, FL3);
wobei jede Transformatorvorrichtung umfasst:
einen Wechselrichter-Transformator (T1, T2, T3), der eine primäre Spule (T1-1, T2-1, T3-1) und eine sekundäre Spule (T1-2, T2-2, T3-2) aufweist; und
einen Ausgleichstransformator (CT1, CT2, CT3), der eine primäre Spule (CT1-1, CT2-1, CT3-1) und eine sekundäre Spule (CT1-2, CT2-2, CT3-2) aufweist;
wobei die primäre Spule (T1-1, T2-1, T3-1) des Wechselrichter-Transformators mit dem Schaltkreis verbunden ist;
die sekundäre Spule (T1-2, T2-2, T3-2) jedes der Wechselrichter-Transformatoren mit einer jeweiligen der Entladungsröhren (FL1, FL2, FL3) verbunden ist; und
wobei die Ausgleichstransformatoren (CT1, CT2, CT3) vorgesehen sind, um den Strom ab- bzw. anzugleichen, der durch die Wechselrichter-Transformatoren (T1, T2, T3) fließt,
**dadurch gekennzeichnet, dass** der Wechselrichter-Transformator und der Ausgleichstransformator integral bzw. einstückig gebildet sind, indem sie einen Teil ihres Kernabschnitts teilen,

2. Treiberschaltung nach Anspruch 1, wobei
in jeder Transformatorvorrichtung die primäre Spule des Wechselrichter-Transformators und die sekundäre Spule des Ausgleichstransformators in Reihe geschaltet sind, und
eine Ausgabe des Schaltkreises beiden Enden der Reihenschaltung bereitgestellt bzw. zugeführt wird.

3. Treiberschaltung nach Anspruch 2, wobei
die primären Spulen der Wechselrichter-Transformatoren in der Mehrzahl von Transformatorvorrichtungen eine Verbindung gemeinsam aufweisen, die mit dem Schaltkreis verbunden ist, und
die sekundären Spulen der Ausgleichstransformatoren in der Mehrzahl von Transformatorvorrichtungen eine Verbindung gemeinsam aufweisen, die mit dem Schaltkreis verbunden ist.

4. Treiberschaltung nach Anspruch 1, wobei
primäre Spulen der Ausgleichstransformatoren in der Mehrzahl von Transformatorvorrichtungen in Reihe geschaltet sind, und
der Schaltkreis mit beiden Enden der Reihenschaltung der primären Spulen der Ausgleichstransformatoren verbunden ist.

## Revendications

1. Circuit de commande, comprenant :
une pluralité d'appareils transformateurs ;
un circuit de commutation (4) relié à une source de courant (1) ; et
une pluralité de tubes de décharge (FL1, FL2, FL3) ;
dans lequel chaque appareil transformateur comprend :
un transformateur inverseur (T1, T2, T3) ayant une bobine primaire (T1-1, T2-1, T3-1) et une bobine secondaire (T1-2, T2-2, T3-2) ; et
un transformateur de compensation (CT1, CT2, CT3) ayant une bobine primaire (CT1-1, CT2-1, CT3-1) et une bobine secondaire (CT1-2, CT2-2, CT3-2) ;
dans lequel la bobine primaire (T1-1, T2-1, T3-1) dudit transformateur inverseur est connectée audit circuit de commutation ;
la bobine secondaire (T1-2, T2-2, T3-2) de chacun desdits transformateurs inverseurs est connectée à un tube de décharge respectif parmi lesdits tubes de décharge (FL1, FL2, FL3) ; et
dans lequel les transformateurs de compensation (CT1, CT2, CT3) sont prévus pour égaliser le courant qui passe à travers les transformateurs inverseurs (T1, T2, T3) ;
**caractérisé en ce que** le transformateur inverseur et le transformateur de compensation sont formés intégralement par le partage d'une partie de leur secteur de noyau.

2. Circuit de commande selon la revendication 1, dans lequel :
dans chaque appareil transformateur, la bobine primaire du transformateur inverseur et la bobine secondaire du transformateur de compensation sont connectées en série, et
une sortie du circuit de commande est fournie sur les deux extrémités de la connexion en série.

3. Circuit de commande selon la revendication 2, dans lequel :
les bobines primaires desdits transformateurs inverseurs dans ladite pluralité d'appareils transformateurs ont une connexion en commun connectée audit circuit de commutation, et
les bobines secondaires desdits transformateurs de compensation dans ladite pluralité d'appareils transformateurs ont une connexion en commun connectée audit circuit de commutation.

4. Circuit de commande selon la revendication 1, dans lequel :
les bobines primaires des transformateurs de compensation dans ladite pluralité d'appareils transformateurs sont connectées en série, et
le circuit de commutation est connecté aux deux extrémités de la connexion en série des bobines primaires des transformateurs de compensation.
